# EUROPEAN PATENT SPECIFICATION

(11) **EP 4 301 529 B1**
(45) Date of publication and mention of the grant of the patent: **26.03.2025**
(21) Application number: 22709748.2
(22) Date of filing: 04.03.2022
(51) Int. Cl.: B09C 1/02, B09C 1/08, C02F 11/00, B01J 20/00, G21F 9/12, A62D 3/33, B09B 3/70, C02F 101/20, C02F 101/10, B09B 101/30, B09B 101/90, C02F 1/68, C02F 1/70

(54) **REMOVAL OF ARSENIC, ANTIMONY AND TOXIC METALS FROM CONTAMINATED SUBSTRATE**
ENTFERNUNG VON ARSEN, ANTIMON UND TOXISCHEN METALLEN AUS KONTAMINIERTEM SUBSTRAT
ÉLIMINATION DE L'ARSENIC, DE L'ANTIMOINE ET DE MÉTAUX TOXIQUES D'UN SUBSTRAT CONTAMINÉ

(30) Priority: 05.03.2021 LU 102642
(43) Date of publication of application: 10.01.2024
(73) Proprietor: ENVIT, Environmental Technologies and Engineering Ltd., 1218 Komenda (SI)
(72) Inventor: LE TAN, Domen, 1000 Ljubljana (SI); GLUHAR, Simon, 1000 Ljubljana (SI)
(74) Representative: Zacco GmbH
(86) International application number: PCT/EP2022/055567
(87) International publication number: WO 2022/184903

(56) References cited:
- EP-A1- 3 153 246
- EP-A1- 3 492 187
- KR-A- 20190 033 142

## Description

### FIELD OF THE INVENTION

The present invention relates to a batch process for washing of soil, sediment, sludge and other Fe containing substrates to remove toxic metalloids, notably As and Sb, and toxic metals, notably Pb, Zn, Cd, Cu, Ni, Hg, Mo, Mn, Tl, Cr, Cs, Sr, Th and U. The present invention aids in treatment of waste washing and rinsing solutions generated from washing the substrate contaminated with toxic metalloids and with toxic metals. The invention furthermore aids in reclamation of washing and rinsing solutions, reagents and other materials, and in activation of recycled chelator for more efficient removal of toxic metals from substrate.

### RELATED PATENTS

The process described in the present application relates to the processes described in US patent 9108233 B2 entitled "Washing of contaminated soils", US patent 10124378 B2 entitled "Soil and sediment remediation", and US patent 10751771 B2 entitled "Curbing toxic emissions from remediated substrate" of the same applicant.

### BACKGROUND OF THE INVENTION

Natural and industrial substrates such are soil, sediment, compost, sludge, slug, ash and others solids (in the following text simply "substrate") contain iron (Fe) in the form of Fe (oxy)hydroxides. Substrate is frequently contaminated with toxic metalloids such are arsenic (As) and antimony (Sb), and with toxic metals such are lead (Pb), zinc (Zn), cadmium (Cd), cupper (Cu), nickel (Ni), mercury (Hg), molybdenum (Mo), manganese (Mn), thallium (Tl), chromium (Cr), caesium (Cs), strontium (Sr), thorium (Th) and uranium (U). The removal of toxic metalloids and toxic metals from contaminated substrate by washing, extraction, leaching, flushing and rinsing the substrate (in the following text simply "washing") with solution containing polycarboxylic acids, chelators and reductants is known to one skilled in art.

The Fe oxide-hydroxides are the most important sink of metalloids in substrate. Washing with polycarboxylic acids is known to dissolve amorphous Fe oxide-hydroxides and release metalloid from substrate (Tao Y, Zhang S, Jian W, Yuan C, Shan X-q, 2006. Effects of oxalate and phosphate on the release of arsenic from contaminated soils and arsenic accumulation in wheat, Chemosphere 65, 1281-1287). Strong chelators selected from aminopolycarboxylic acids and their salts (in the following text simply "chelators") are known to form strong surface Fe-chelate complexes which replaces metalloid from the binding sites on Fe oxide-hydroxide and cause non-reductive dissolution of Fe oxide-hydroxide and release of metalloid into solution (Gleyzes C, Tellier S, Sabrier R, Astruc M, 2001. Arsenic characterisation in industrial soils by chemical extractions. Environ. Technol. 22, 27-38; Kim EJ, Lee J-C, Baek K, 2015. Abiotic reductive extraction of arsenic from contaminated soils enhanced by complexation: Arsenic extraction by reducing agents and combination of reducing and chelating agents. J. Hazard. Matter. 283, 424-461). It is also known that the reductive dissolution of crystalline Fe oxide-hydroxides by sodium (Na) dithionite (Na₂S₂O₄) enhances the efficiency to extract toxic metalloids (Harper M, Haswell SJ, 1988. A comparison of copper, lead and arsenic extraction from polluted and unpolluted soils. Environ. Tech. Lett. 9, 1271-1280; Kim EJ, Beak K, 2015. Enhanced reductive extraction of arsenic from contaminated soils by a combination of dithionite and oxalate. J. Hazard. Matter. 284, 19-26). The chelators are also known to form stable, water-soluble complexes (chelates) with toxic metals which are in this way efficiently removed from substrate by washing (US patent 9108233 B2 entitled "Washing of contaminated soils" and US patent 10124378 B2 entitled "Soil and sediment remediation" of the same applicant).

Various processes are known to remove toxic metalloids and toxic metals from contaminated water such as ultrafiltration, reverse osmosis and other membrane technologies, ion exchange, coagulation and flocculation technologies, and adsorption on activated alumina, iron-based and other sorbents (Nicomel NR, Leus K, Folens K, Van der Voot P, Du Laing G, 2015. Technologies for arsenic removal from water: Current status and future perspectives. Int. J. Environ. Res. Public. Health 13, 13010062; Joseph L, Jun B-M, Flora JRV, Park CM, Yoon Y, 2019. Removal of heavy metals from water sources in the developing world using low-cost materials: A review. Chemosphere 229, 142-159). However, current art is silent on treating waste washing and rinsing solutions which are separated from the solid phase of the washed substrate and contain toxic metalloids and metals, polycarboxylic acid, chelator and Na-dithionite. Current art is also silent on reuse of treated washing and rinsing solutions in the next in series of substrate washing batches, and on recovery of valuable materials as process by-products.

The US patent 10124378 B2 entitled "Soil and sediment remediation" of the same applicant discloses a process wherein solution with chelator is used to wash toxic metals from contaminated substrate. The washed substrate is rinsed to remove residual toxic metals and reagent. After solid / liquid separation the waste washing and rinsing solutions are treated in a pH gradient to remove toxic metals and recycle water and chelator. The US patent 10124378 B2 is silent on removal of toxic metalloids As and Sb from contaminated substrates. The patent is also silent on removal of toxic metalloids and polycarboxylic acids, reductant and their residues form waste washing and rinsing solutions. The patent is furthermore silent on activation of chelator for more efficient removal of toxic metals and metalloids from substrate and shorter extraction time. In the described process the uses of polysaccharides for alkaline adsorption of toxic metals and their removal from waste washing and rinsing solutions is mandatory.

US patent 10751771 B2 entitled "Curbing toxic emissions from remediated substrate" aids in the washing of substrates contaminated with toxic metals using aminopolycarboxylic chelators, and solves problem of toxic emissions from washed substrates by applying zero valent iron (ZVI) into the substrate slurry. The patent is silent on removal of toxic metalloids from substrates, on treatment of waste washing and rinsing solutions from the process, and on activation of chelator.

In another known process disclosed in KR patent 102027648 B1 entitled "Method of arsenic treatment and oxalate recovery from soil washing wastewater" the oxalic acid is used to wash As from contaminated soil. Ferric iron in the wastewater is reduced to ferrous iron by addition of reductant, preferably dithionite, to precipitate and recover ferrous oxalate phase. Hydrogen sulphide (H2S) produced by the decomposition of dithionite reacts with As in wastewater and forms insoluble sulphide phase which is removed. The hydrogen sulphide (H2S), which is purposely produced in known process, is a highly toxic gas which pose health hazard. In the process described in this Korean patent reductant (dithionite) is applied into wastewater to precipitate As and metals from the liquid phase. Moreover, in the known process the wastewater is acidic with pH between 1 and 2 and As precipitate from wastewater in a sulphide form and the oxalate is precipitated / recovered from wastewater as Fe-salt.

Further reference is also made to the disclosure of EP 3492187 A, KR 20190033142 A and EP 3153246 A which disclose the removal of toxic metalloids and toxic metals from a contaminated substrate by washing, extraction, leaching, flushing and rinsing the substrate with a solution containing polycarboxylic acids, chelators and reductants.

### SUMMARY OF THE INVENTION

The present invention relates to a batch process for washing of soil, sediment, sludge and other Fe containing substrates to remove toxic metalloids, notably As and Sb, and toxic metals, notably toxic metals selected from Pb, Zn, Cd, Cu, Ni, Hg, Mo, Mn, Tl, Cr, Cs, Sr, Th and U, as recited in claim 1.

The present invention aids in treatment of waste washing and rinsing solutions generated from washing the substrate contaminated with toxic metalloids and with toxic metals. The invention furthermore aids in reclamation of washing and rinsing solutions, reagents and other materials, and in activation of recycled chelator for more efficient removal of toxic metals and metalloids from substrate.

The present invention relates to a method in accordance with claim 1 as follows:
1. A batch process for washing of Fe containing substrate, such as soil, sediment or sludge, to remove toxic metalloids, notably As and Sb, and/or toxic metals, notably toxic metals selected from the group consisting of Pb, Zn, Cd, Cu, Ni, Hg, Mo, Mn, Tl, Cr, Cs, Sr, Th and U, in a series of batch processes, said process comprising:
   (a) preparing a substrate slurry by slurrying a Fe containing substrate with a washing solution containing a chelator which is poorly soluble in acidic aqueous solutions, wherein said chelator is in the form of a Ca-chelator-complex recovered in the previous in series of batches, wherein the solid / liquid ratio of the slurry is in the range 1 / 0.8 - 1 / 30;
   (b) addition of an acidic form of chelator recovered in the previous in series of batches and optionally fresh chelator to supplement chelator losses during the process into the substrate slurry in step (a) to yield a final concentration of the chelator ranging from 10 to 300 mM;
   (c) addition of an acid capable of forming an insoluble Ca salt to the substrate slurry in step (a) in a concentration ranging from 10 to 300 mM to dissolute toxic metalloids, if present, from substrate, and to activate the chelator by wining Ca from the Ca-chelator-complex to dissolute toxic metals and Fe from substrate;
   (d) washing the substrate slurry from step (a) for 15 - 720 min;
   (e) addition of a reductant to the substrate slurry in step (a) or during the substrate washing step (d) in single or multiple doses in total concentration of 5 - 200 mM, to promote dissolution of toxic metalloids;
   (f) optionally, addition of 0.1 - 20% (w/w, dry weight) of a material having cation-exchange properties to the substrate slurry in step (d) to improve the cation-exchange properties of the substrate and in this way to prevent concentration of cations, such as Na ions, in washing and rinsing solutions;
   (g) optionally, addition of 0.05 - 5% (w/w, dry weight) of a metal capable of forming oxide-hydroxides or of a layered-double-hydroxides to the substrate slurry in step (d) to curb emissions of chelator, toxic metalloids and toxic metals from the washed and rinsed substrate prepared in step (i);
   (h) solid / liquid separation of slurry after the washing step (d) to obtain washed substrate and waste washing solution;
   (i) rinsing at least once, e.g., 1-5 times, the washed substrate obtained in step (h) with a rinsing solution and, optionally, with fresh water to supplement water losses during the process to remove residual reagents, toxic metalloids and toxic metals from the substrate, and solid / liquid separation to obtain a waste rinsing solution, and washed and rinsed substrate as a final product;
   (j) alkalinisation of the waste washing solution obtained in step (h) and at least one of the waste rinsing solutions obtained in step (i) with a Ca containing base to pH 5.0 - 8.0 to precipitate a Ca-salt of the acid employed in step (c) as a by-product;
   (k) alkalinisation of waste washing and rinsing solutions obtained in step (j) with Ca-containing base to pH 8.5 - 11.0 to precipitate Fe from Fe-chelator-complex and co-precipitate toxic metalloids as a by-products;
   (l) alkalinisation of waste washing and rinsing solutions obtained in step (k) with Ca-containing base to pH > 11.5 to recover >80% of the chelator as Ca-chelator-complex, to precipitate hydroxides of toxic metals and Ca(OH)₂ formed after hydration of Ca containing base as a by-products, and to yield washing solution to be used in step (a), and rinsing solution to be used in step (i) in the next in series if batches;
   (m) optionally, addition of a polysaccharide material to the waste washing and rinsing solutions in step (l) to enhance toxic metals removal by alkaline adsorption on polysaccharide material; and
   (n) acidification of at least one of rinsing solutions obtained in step (l) with H₂SO₄ to pH 1.5 - 3 to precipitate the acidic form of chelator to be used in step (b), and yield rinsing solutions to be used in step (i) in the next in series of batches.

Dependent claims refer to preferred embodiments of the invention.

### BRIEF DESCRIPTION OF THE DRAWINGS

Preferred embodiments of the invention will now be described with reference to the appended drawings, wherein:

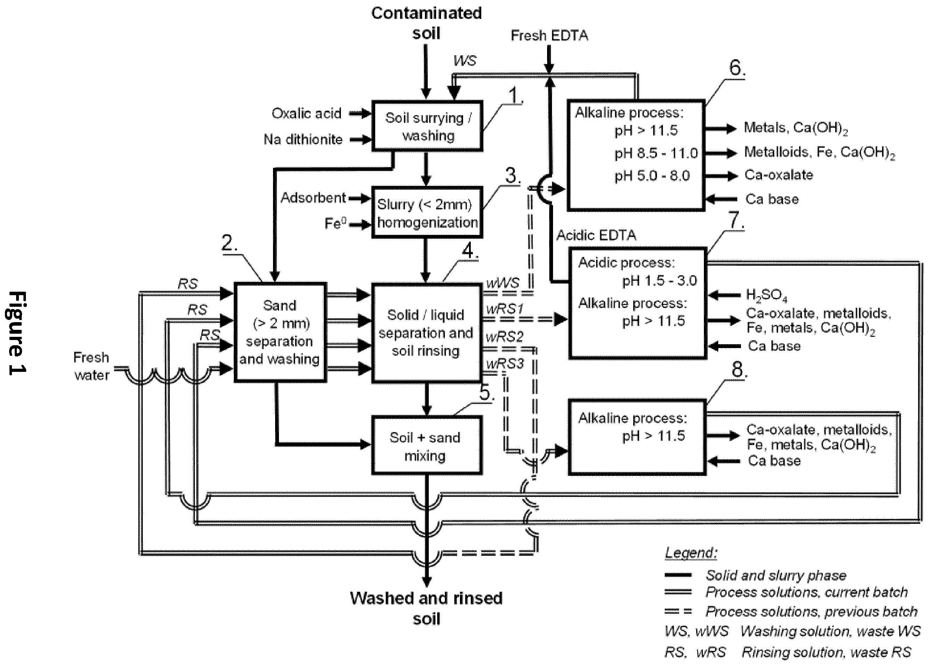

FIG. 1 shows the flowchart of the preferred embodiment of the invention for washing of soil dually contaminated with toxic metalloids and metals. (1.) Soil slurrying, addition of oxalic acid, Na-dithionite and EDTA, and soil washing in polymer coated reactor. (2.) Separation of sand fraction with > 2mm from the slurry and washing the sand with the rinsing solutions (RS) treated in the previous in series of batches. (3.) Mixing material with cation exchange properties (adsorbent) and zero valent iron (Fe⁰) into the soil slurry. (4.) Separation of solid and liquid phases of the soil slurry in filter press and in press soil rinsing with three RS and with fresh water to compensate water losses during the process. (5.) Aggregation of washed and rinsed solid phase into artificial structure and mixing with washed sand to constitute final washed and rinsed soil. (6.) Treatment of the waste washing solution (wWS) with Ca containing base to recover (a) Ca-oxalate, (b) the precipitate of toxic metalloids and Fe, (c) the precipitate of toxic metal hydroxides and the excess of hydrated lime (Ca(OH)₂), and to recycle EDTA in the form of Ca-EDTA. (7) Alkalinisation of the first waste rinsing solution (wRS1) from the filter press with Ca containing base to pH > 11.5 to simultaneously remove Ca-oxalate, toxic metalloids and Fe, toxic metal hydroxides and hydrated lime. Acidification with H₂SO₄ to precipitate and recycle EDTA in acidic form. (8) Alkalinisation of the third waste rinsing solution (wRS3) from the filter press with Ca containing base to pH> 11.5 to simultaneously remove Ca-oxalate, toxic metalloids and Fe, toxic metals hydroxides and hydrated lime, and to recycle EDTA in the form of Ca-EDTA.

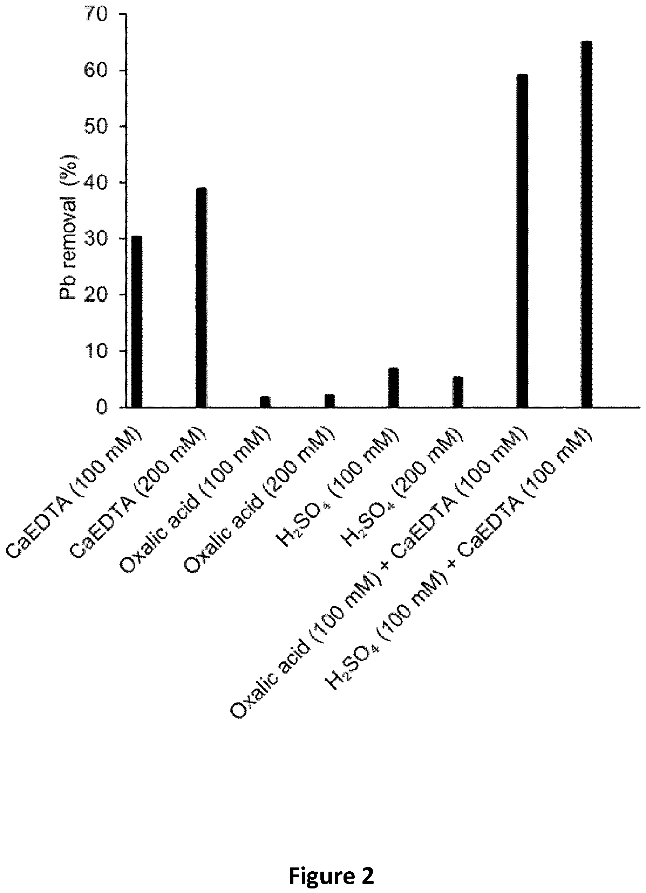

FIG. 2 shows the activation of Ca-EDTA in washing solution by addition of oxalic and sulphuric (H₂SO₄) acid. After 1 h of soil washing the removal of Pb was the highest with washing solution containing Ca-EDTA (100 mM) activated by H₂SO₄ (100 mM), and with washing solution containing Ca-EDTA (100 mM) activated by oxalic acid (100 mM). The removal of Pb using washing solutions containing non-activated Ca-EDTA (100 and 200 mM) was significantly lower. Washing with solution containing only oxalic acid (100 and 200 mM) and H₂SO₄ (100 and 200 mM), was not effective in soil Pb removal.

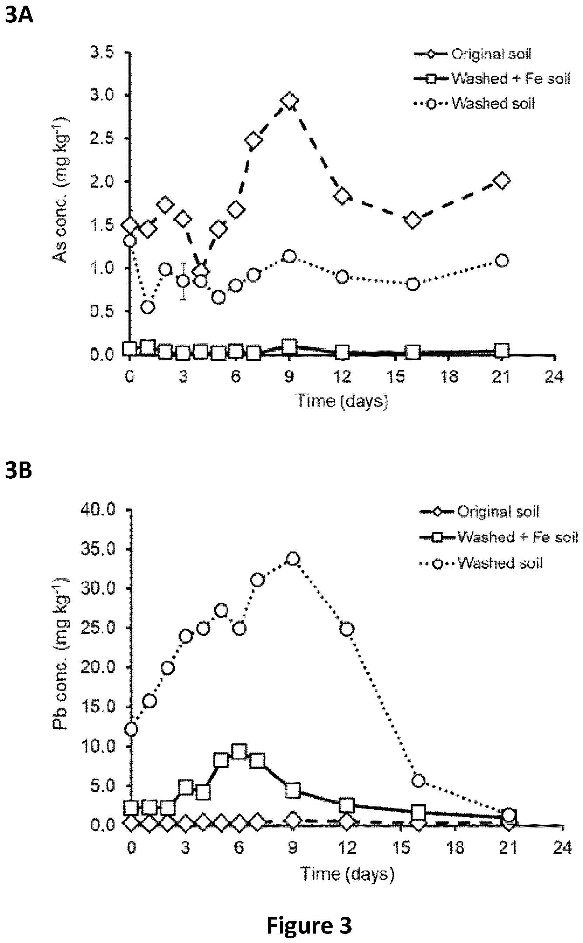

FIGS. 3A and 3B show potential emissions of As and Pb from original, not-washed soil (Original soil), from washed and rinsed soil where zero-valent Fe was applied into the slurry (Washed + Fe soil), and from washed and rinsed soil where zero-valent Fe was not applied (Washed soil). Potential emissions were assessed by extraction of soils with deionised water (w / V ratio 1 / 1). Data are given as means and standard deviations of three replicates.

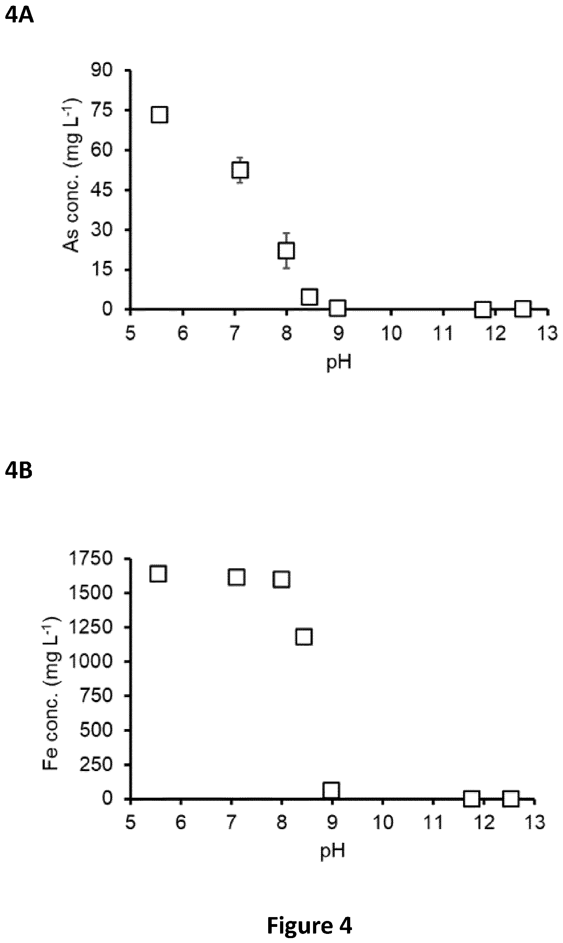

FIGS. 4A and 4B show removal of As and Fe from waste washing (wWS) solution by alkalization with CaO to pH 9.0. The wWS was obtained after washing the As and Pb contaminated calcareous soil with EDTA, oxalic acid and Na-dithionite. Data are given as means and standard deviations of three replicates.

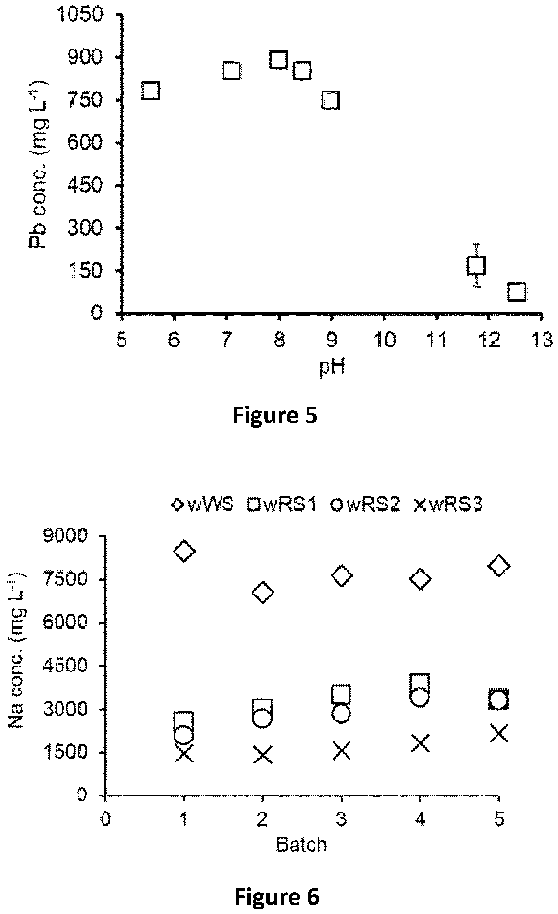

FIG. 5 shows removal of Pb from waste washing solution (wWS) by alkalization with CaO to pH 12.5. The wWS was obtained after washing the As and Pb contaminated calcareous soil with EDTA, oxalic acid and Na-dithionite. Data are given as means and standard deviations of three replicates.
FIG. 6 shows the concentration of Na in the waste washing solution (wWS) and in the waste first, second and third rinsing solutions (wRS1, wRS2, wRS3, respectively). The concentration of Na did not vary significantly throughout the series of 5 soil washing batches.

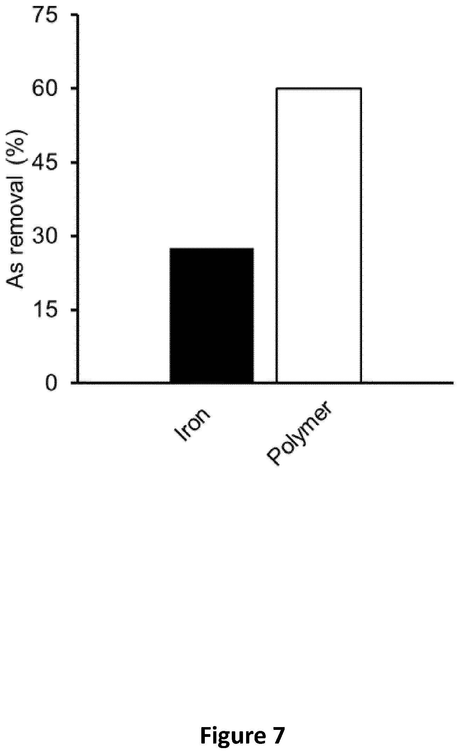

FIG. 7 shows higher extraction efficiency of As from contaminated soil washed in polymer-coated vessel compared to vessel with bare iron surface.

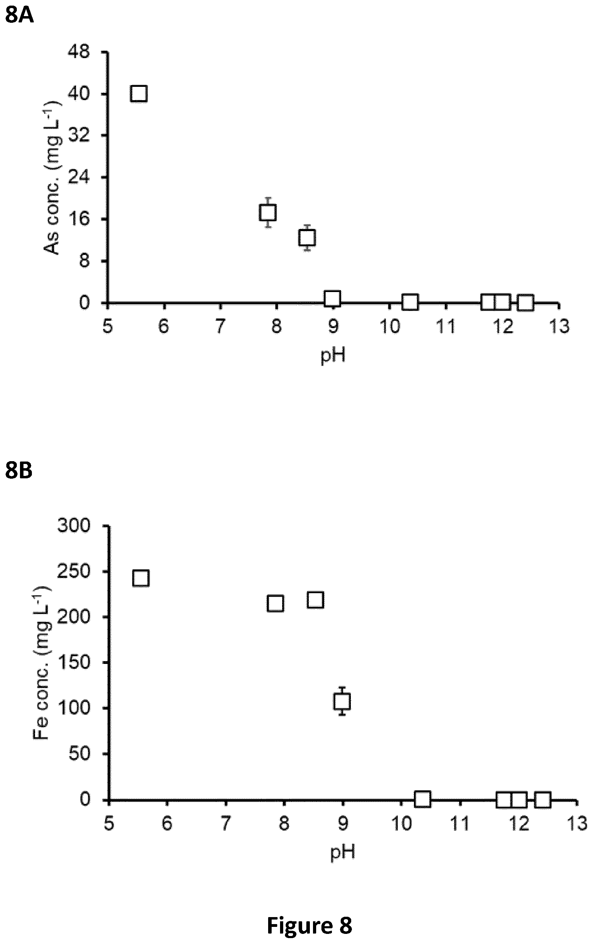

FIGS. 8A and 8B show removal of As and Fe from waste washing solution (wWS) by alkalization with CaO to pH 9.0. The wWS was obtained after washing the As and Pb contaminated calcareous soil with EDTA and oxalic acid only, without use of Na-dithionite. Data are given as means and standard deviations of three replicates.

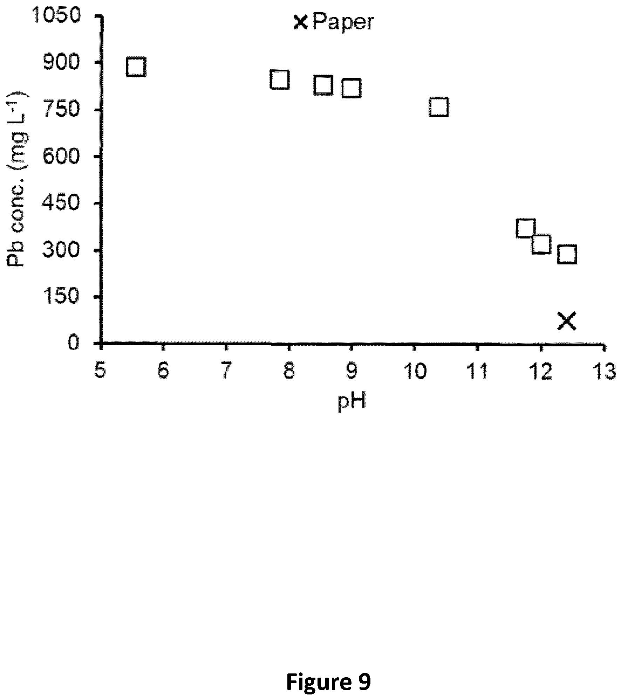

FIG. 9 shows removal of Pb from waste washing solution (wWS) by alkalization with CaO to pH 12.5 (squares), and after subsequent addition of waste paper for alkaline adsorption of Pb on polysaccharide material (cross). The As and Pb contaminated calcareous soil was washed with washing solution (WS) containing EDTA and oxalic acid, without use of Na-dithionite. Data are given as means and standard deviations of three replicates.

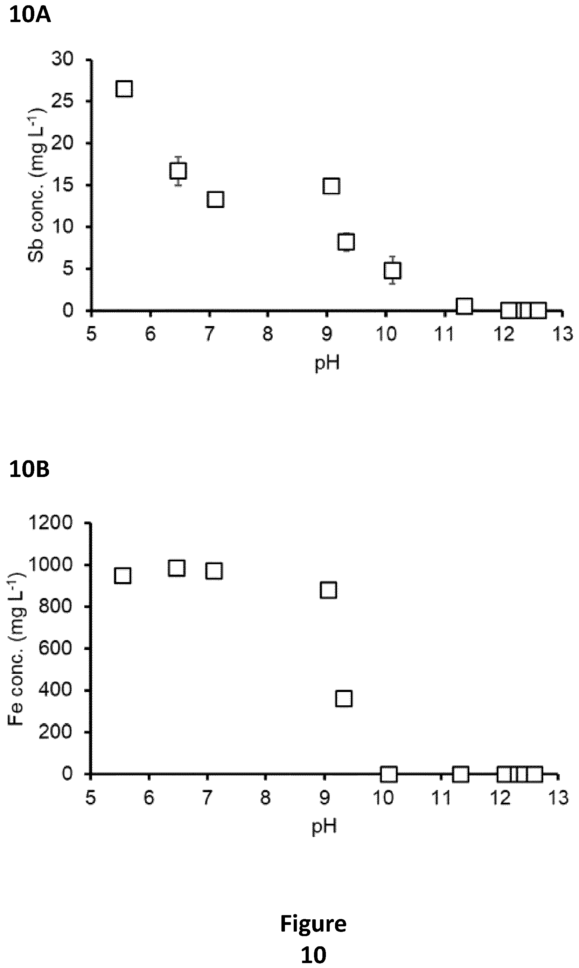

FIGS. **10A** and **10B** show removal of Sb and Fe from waste washing solution (wWS) by alkalization with CaO to pH 10.0. The Sb and Pb contaminated limestone sand from stop butt of shooting range was washed with washing solution (WS) containing EDTA, oxalic acid and Na-dithionite.

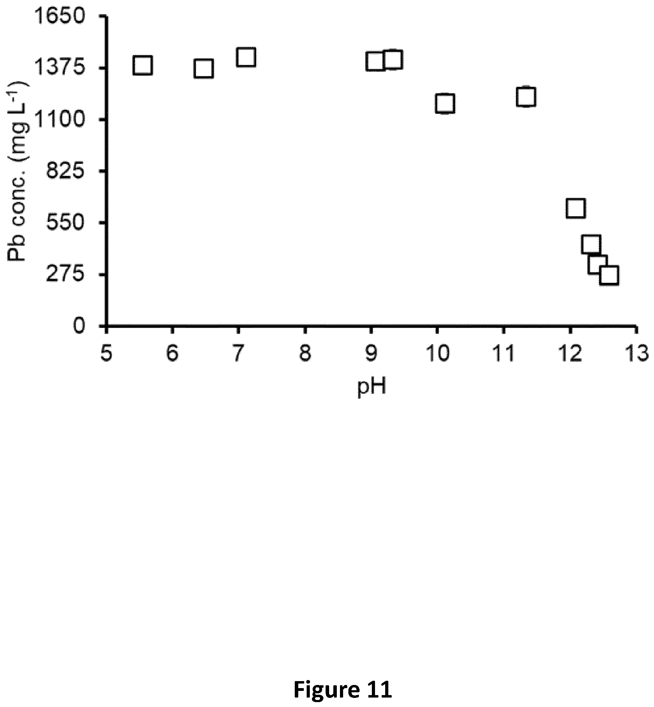

FIG. **11** shows removal of Pb from waste washing solution (wWS) by alkalization with CaO to pH 12.5. The Sb and Pb contaminated limestone sand from stop butt of shooting range was washed with washing solution (WS) containing EDTA, oxalic acid and Na-dithionite.

### DETAILED DESCRIPTION

The present invention aids in treatment of waste washing and rinsing solutions generated from washing the substrate contaminated with toxic metalloids, notably As and Sb, and with toxic metals, notably Pb, Zn, Cd, Cu, Ni, Hg, Mo, Mn, T1, Cr, Cs, Sr, Th and U. The invention furthermore aids in reclamation of washing and rinsing solutions, reagents and other materials, and in activation of recycled chelator for more efficient removal of toxic metals from substrate. Generally, the present invention provides a batch process for washing of Fe containing substrate, such as soil, sediment or sludge, to remove toxic metalloids As and Sb and/or toxic metals selected from the group consisting of Pb, Zn, Cd, Cu, Ni, Hg, Mo, Mn, Tl, Cr, Cs, Sr, Th and U, in a series of batch processes, according to claim 1.

By way of non-limiting example, the process according to invention is a batch process of slurrying and washing of Fe containing substrate contaminated with toxic metalloids and toxic metals with solution containing polycarboxylic acid, Na-dithionite and chelator as reagents. The washed substrate and waste washing solution are separated. The washed substrate is further rinsed with one or several rinsing solutions to remove toxic metalloids, toxic metals and reagents which remained in pore water of the washed substrate. The washed and rinsed substrate and the waste rinsing solutions are separated by filtration or other means known by one skilled in art. The concentration of Na ions in washing and rinsing solutions is prevented by Na adsorption on solid surfaces of the substrate. Materials with cation exchange properties may be added into the slurry to enhance Na adsorption. The waste washing and rinsing solutions are treated by addition of Ca-containing base (a) to precipitate polycarboxylic acid as Ca salt, (b) to co-precipitate toxic metalloids and Fe at pH > 8.0, and (c) to precipitate toxic metal hydroxides and optionally adsorb toxic metals on polysaccharide material at pH > 11.5. The precipitates are removed from solutions by filtration or other means known by one skilled in art. At pH > 11.5 the chelator in waste washing solution is recycled in the form of Ca-chelate. The process according to invention comprise activation of chelator by Ca winning by the applied acidity. The recycled chelator and treated washing and rinsing solutions are reused for substrate washing and rinsing in the subsequent in said series of batch processes.

Specifically, polycarboxylic acids such are oxalic, tartaric, citric and mixture thereof which are known by one skilled in art to (a) dissolve metalloids As and Sb from amorphous Fe (oxy)hydroxides and (b) to form insoluble salts with Ca can be used. Oxalic acid is used preferentially: it forms highly insoluble Ca-oxalate (water solubility 0.67 mg L⁻¹ at 20 °C) over a wide range of pH, it is widely used in industries and therefore relatively inexpensive. In process according to invention the Ca salt, preferentially Ca containing base such is quick lime (CaO), lime (Ca(OH)₂), calcium peroxide(CaO₂), and mixture thereof is applied into the waste washing and rinsing solutions to precipitate Ca-oxalate. The Ca-oxalate can be recovered as a valuable raw material for industrial processes, i.e. in the manufacture of ceramic glazes.

Strong chelators can be used such are nitrilotriacetate (NTA), S,S ethylenediamine-disuccinate (EDDS), diethylenetriamine-pentaacetate (DTPA), ethylenediaminete-tetraacetate (EDTA) and others which precipitate from aqueous solution at pH < 3.0 in acidic form. EDTA is used preferentially since it very efficiently removes toxic metals from substrate, is produced commercially for use in different industries, and is the least expensive of commercial chelators. EDTA transfers Fe and toxic metals from the substrate into waste washing and rinsing solutions by chelation. In process according to invention after precipitation of Ca-oxalate the Ca containing base is further added into the waste washing and rinsing solutions to pH > 8.0 where Fe ion leave EDTA chelate and precipitate as Fe hydroxide and (oxy)hydroxide. Metalloids (As and Sb) dissolved in the waste washing and rinsing solutions co-precipitate with Fe hydroxide and (oxy)hydroxide and are removed by filtration or by other means known to one skilled in art. This by-product is a resource of valuable metalloids. For example, the European Commission has highlighted Sb in its critical raw materials report, as the element with the largest expected supply-demand gap (Dupont D, Arnout S, Jones PT, Binnemans K, 2016. Antimony recovery from end-of-life products and industrial process residues: A critical review. J. Sustain. Metall. 2, 79-103).

Similar kind of As removal is known from treating gold mining effluents (Hamberg R, Bark G, Maurice G, Alakangas L, 2016. Release of arsenic from cyanidation tailings. Minerals Eng. 93, 57-64). In short: gold in inclusions in arsenopyrite is leached by cyanidation. Effluents with released As are treated with Fe₂(SO₄)₃ and lime to obtain alkalinity. The added Fe precipitates as Fe oxide-hydroxide and the majority of dissolved As is removed from effluent incorporated in Fe precipitate.

The main characteristics that distinguish the process according to invention from the process described by Hamberg et al (2016) are:
a. In known process addition of external Fe source, i.e. Fe₂(SO₄)₃, is required for As co-precipitation and removal from aqueous effluents.
b. In the process according to invention the addition of external Fe source is not required. The waste washing and rinsing solutions contain chelated Fe which originate from substrate and is co-precipitated with As and Sb at pH > 8.0.
c. In the process according to invention toxic metals as well as toxic metalloids are removed from waste washing and rinsing solutions.
d. In the process according to invention chelator, washing and rinsing solutions and other materials are recovered.

Moreover, with respect to the process described in KR patent 102027648 B1 entitled "Method of arsenic treatment and oxalate recovery from soil washing wastewater", the main characteristics that distinguish the process according to invention from the known process are:
a. In known process reductant (dithionite) is applied into wastewater to precipitate As and metals from the liquid phase, whereas in process according to invention reductant is applied into washing solution to dissolute As, Sb and metals from the solid phase.
b. In known process the wastewater is acidic with pH between 1 and 2 and As precipitate from wastewater in a sulphide form. In process according to invention the waste washing and rinsing solutions are alkalinised to pH > 8.5 and As and Sb co-precipitates from solutions with iron hydroxide.
c. In known process the oxalate is precipitated / recovered from wastewater as Fe-salt, whereas in process according to invention the oxalate is precipitated as Ca-salt.

After Ca-salt, such as Ca-oxalate, and toxic metalloids are removed, the waste washing and rinsing solutions are treated following a procedure disclosed in US patent 10124378 B2 entitled "Soil and sediment remediation" of the same applicant. This known process is imbedded into the process according to invention. In short: the Ca containing base is added to achieve pH > 11.5. In strongly alkaline conditions toxic metals chelated to a chelator such as EDTA are substituted with Ca from Ca-containing base to recycle the chelator in washing and rinsing solutions as Ca-chelator-complex, such as Ca-EDTA. The released toxic metals are precipitated as hydroxides and optionally adsorbed on polysaccharide material and are removed from washing and rinsing solutions by filtration or by other means known to one skilled in art. The removed material can be used as resource of valuable metals. The rinsing solution is further acidified with sulphuric acid (H₂SO₄) to pH < 3.0 to precipitate the chelator, such as EDTA, in acidic form and to remove the excess Ca from alkaline phase of the process as insoluble gypsum (CaSO₄). The acidic form of the chelator, such as EDTA, and treated washing and rinsing solutions are reused in the next in series of batches. To compensate for the chelator losses in the process, fresh chelator, such as in the form of Na-chelator-complex, such as Na-EDTA, may be added, especially during step b) so to yield a final concentration of the chelator ranging from 10 to 300 mM.

Washing the substrate with solution wherein chelator is mostly in the form of Ca-chelator-complex, such as Ca-EDTA, typically requires > 10 h to achieve effective removal of toxic metals (Lestan D, 2017. Novel chelant-based washing method for soil contaminated with Pb and other metals: a pilot-scale study. Land Degrad. Dev. 28, 2585-2595). This is because the dissolution of toxic metals by, e.g., Ca-EDTA is kinetically hindered, i.e. relative to that of Na-EDTA (Jez E, Lestan D, 2016. EDTA retention and emissions from remediated soil. Chemosphere 151, 202-209). In process according to invention mineral and organic acids selected from, but not limited to H₂SO₄, oxalic, citric, maleic and malonic are added into the washing solution containing Ca-chelator-complex, such as Ca-EDTA, or into substrate slurred with said solution. The stability of a Ca chelate, such as Ca-EDTA chelate, is known to decrease with the acidity of solution (Kim C, Lee Y, Ong S-K, 2003. Factors effecting EDTA extraction of lead from lead contaminated soils. Chemosphere 51, 845-853). The applied acidity wins Ca from the chelate and in this way activates EDTA. In contrast to a chelator like EDTA some polycarboxylic acids, i.e. citric and maleic form strong chelates with Ca in acidic solutions (Bazin H, Bouchu A, Descotes G, Petit-Ramel M, 1995. Comparison of calcium complexation of some carboxylic acids derived from D-glucose and D-fructose. Can. I. Chem. 73, 133-1347). These acids enhance activation of a chelator like EDTA by capturing Ca from chelator-complex to form insoluble (i.e. oxalic and citric acid) and soluble Ca-salt (i.e. maleic and malonic acid). Sulphuric acid (H₂SO₄) enhances activation of a chelator like EDTA by capturing Ca from Ca-chelator-complex to form insoluble salt, gypsum (CaSO₄). Activation of EDTA shortens the time required for effective substrate washing for several times, typically to 1 h or less. For washing substrates contaminated with toxic metalloids and metals the oxalic acid is used preferentially for chelator activation, since it is already preferentially used for dissolution of metalloids. For washing substrates contaminated solely with toxic metals the H₂SO₄ is used preferentially for chelator activation.

The reductant, such as Na-dithionite (Na₂O₄S₂), is applied into the substrate slurry in one or several additions for reductive dissolution of crystalline Fe (oxy)hydroxides and release of bound toxic metalloids into the washing solution. Na-dithionite is in oxidative conditions unstable molecule and during substrate washing quickly degrade, releasing Na into washing solution (de Carvalho LM, Schwedt G, 2001. Polarographic determination of dithionite and its decomposition products: kinetic aspects, stabilizers, and analytical application. Analyt. Chim. Acta 436, 293-300). Additional source of Na in washing solution is supplement of Na-salt of chelator, such as EDTA, to compensate losses of chelator during the process. In substrates with high cation exchange capacity the excess Na is adsorbed onto solid surfaces of the substrate. However, washing substrates with low cation exchange capacity may lead, after series of batches, to concentration of Na in washing and rinsing solutions and deterioration of thereof.

In process according to invention the materials with cation-exchange properties may be added into the substrate slurry to increase the Na adsorption capacity of the solid phase. These materials are selected from zeolites such are microporous aluminosilicate minerals, other clays, biochar, compost, manure and other humic materials and other materials and mixture thereof, known to one skilled in art to efficiently exchange and adsorb cations (Ursini O, Lilla E, Montanari R, 2006. The investigation on cationic exchange capacity of zeolites: the use as selective ion trappers in the electrokinetic soil technique. J. Hazard. Mater. 137, 1079-1088).

The polysaccharide materials is used for removal of toxic metals from waste washing and rinsing solution by alkaline adsorption and is mandatory in known process disclosed in US patent 10124378 B2 entitled "Soil and sediment remediation" of the same applicant, while in the present invention it is merely optional. Thus, in preferred embodiments, the process of the invention does not include step (m). In preferred embodiments, the process of the invention does not involve the use of polysaccharide materials such are natural and artificial materials containing cellulose, hemicellulose, lignocellulose such are waste paper, rice hulls, corn cobs, and sawdust.

### DESCRIPTION OF EXAMPLARY EMBODIMENT(S)

The batch process of the present invention is further illustrated by way of the following non-limiting exemplary embodiment(s).

The calcareous soil contaminated with 230 mg kg⁻¹ of As as toxic metalloid and 1500 mg kg⁻¹ of Pb as toxic metal was slurryed in polymer-coated vessel with the washing solution (WS) recycled from previous in series of batches (step 1 in FIG. 1). The WS contained approx. 100 mM EDTA. The solid (air dry soil weight, w) / liquid (volume of WS, V) ratio in the slurry was 1 / 1.5. The oxalic acid (100 mM) and Na-dithionite (50 mM) were added into the slurry. The oxalic acid was use (a) to dissolve As from amorphous soil Fe (oxy)hydroxides and (b) to activate Ca-EDTA in the WS. As shown in FIG. 2 the applied acidity increased the efficiency of Ca-EDTA in WS to remove Pb from soil. The activation of EDTA enabled shortening of the washing time to 1 h after which the sand fraction (> 2 mm) was separated from slurry by wet sieving and washed with the three rinsing solutions (RS) recycled from previous in series of batches, and with fresh water (step 2 in FIG. 1). The w (air dry soil) / V ratio was 1 / 1 for each RS. Fresh water was added to compensate for losses of water from the process: due to the difference in moisture between the soil entering and exiting the process, water lost with moist solid wastes, and by hydration of CaO. The slurry (< 2mm) was mixed with 1% (w / w) of zero-valent Fe (< 0.5 mm granules) as described in the US patent 10751771 B2 "Curbing toxic emissions from remediated substrate" of the same applicant. The slurry was transferred to a chamber filter press where the washed soil was separated from the waste washing solution (wWS). The washed soil in the press was rinsed with three RS and water from the sand washing step, as shown in step 4 in FIG. **1****.** Blocks of washed and rinsed soil from the filter press were milled to obtain artificial soil aggregate grains, approx. 5 mm wide, and mixed with washed sand to constitute the final product of soil washing process (step 5 in FIG. 1). Washing reduced concentration of As an Pb in soil for 59 and 75%.

The addition of zero-valent Fe into the slurry (step 3 in FIG. 1) reduced emissions of As from washed and rinsed soil close to limit od detection (FIG. 3A) and significantly reduced emissions of Pb (FIG. **3**B) compared to soil washing process where zero-valent Fe was not applied. However, other solids which are known to one skilled in art to possess anion-exchange properties for example Fe hydroxides and oxide-hydroxides, as described in US patent 10751771 B2 entitled "Curbing toxic emissions from remediated substrate" of the same applicant, and other layer-double-hydroxides i.e. anionic clays can be used to curb emissions (Maziarz, P., Matusik, J., Str 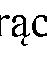 czek, T., Kapusta, C., Woch, W.M., Tokarz, W., Radziszewska, A., Leiviskä, T. 2019. Highly effective magnet-responsive LDH-Fe oxide composite adsorbents for As(V) removal. Chem. Eng. J. 362, 207-216.)

The oxalic acid was not detected in wWS. It was spent for dissolution of As from amorphous Fe oxide-hydroxides, activation of EDTA, and reaction with Ca in calcareous soil to form insoluble Ca-oxalate which remain in washed and rinsed soil. The wWS was treated by alkalization with CaO (pH 9, 30 min, step 8 in FIG. 1) to co-precipitate As with Fe (FIGS. 4A and 4B). The solid material was removed from solution by filtration. After removal of As and Fe the wWS was further treated by alkalization with CaO (pH 12.5, 30 min, FIG. 1) to recycle EDTA in the form of Ca-EDTA and to precipitate and remove Pb as Pb hydroxide (FIG. 5). The Pb hydroxide and excess Ca(OH)₂ obtained after hydration of CaO were removed from solution by filtration.

The waste first and third rinsing solutions (wRS1, wRS3, FIG. 1) contained less potentially valuable metalloid. They were alkalized with CaO directly to pH 12.5 (30 min) to recycle EDTA in the form of Ca-EDTA, to co-precipitate As and Fe, and to precipitate Pb as Pb hydroxide. The precipitates and excess Ca(OH)₂ were removed from solution by filtration altogether (steps 6 and 7, FIG. **1**). The wRS1 was after alkaline phase acidified to pH 2 by the addition of 96% H₂SO₄ to precipitate (120 min reaction) and recover the remaining EDTA in acidic form by filtration (step 7 in FIG. 1). Thus treated RS1 and RS2 were re-used for sand washing and soil rinsing in the next in series of batches. The waste second rinsing solution (wRS2 in FIG. **1**) was not treated; it was directly used for sand washing and soil rinsing in the next in series of batches (RS2 in FIG. **1**).

The acidic form of EDTA reclaimed from wRS1 (step 7 in FIG. **1**) and fresh Na-EDTA were applied into treated WS (FIG. **1**). Fresh Na-EDTA was added to compensate for the chelator losses in the process, mainly due to binding to the soil solid phase. Finally, the WS contained approx. 85 mM of Ca-EDTA, 5 mM of EDTA in acidic form and 10 mM of Na-EDTA, and was used for soil slurrying and washing in the next in series of batches.

The Na-dithionite was oxidatively degraded during soil washing and was not detected in the wWS and wRS, except for residual Na. The Na arise also from addition of Na-EDTA. The cation exchange capacity of the washed soil was sufficient to prevent building up of Na in WS and RS and deterioration of thereof (FIG. **6**). In another embodiment the solid material with cation exchange properties is added into the substrate slurry (step 3 in FIG. **1**) to prevent Na concentration in WS and RS after series of batches.

The soil slurry was washed in polymer-coated vessel. As shown in FIG. **7**, the inert coating enables for better extraction efficiency of As, presumably by preventing the loss of oxalic acid by adsorption on bare iron surface.

In yet another embodiment the same calcareous soil was washed with EDTA and oxalic acid (both 100 mM) using the same process conditions, but without use of Na-dithionite. Washing removed 25% of As and 55% of Pb. The concentration of Fe in wWS (approx. 240 mg L⁻¹) was >7-times lower compared to embodiment with Na-dithionite. The removal of As from wWS (FIG. 8A) by co-precipitation with Fe (FIG. **8**B) after alkalization with CaO (pH 9, 30 min) was, however, not impaired. The wWS was further alkalinised with CaO to pH 12.5 to recycle EDTA as Ca-EDTA, and to precipitate Pb as insoluble hydroxide. In embodiment without use of Na-dithionite the addition of waste paper into wWS at pH 12.5 was required to achieve effective Pb removal by alkaline adsorption on polysaccharide material (FIG. **9**), as it is disclosed in US patent 10124378 B2 entitled "Soil and sediment remediation" of the same applicant. This known process is imbedded into the process according to invention.

The embodiment with Na-dithionite was approx. 2-times more effective in As removal compared to embodiment without Na-dithionite. The Fe concentration in the wWS was also significantly higher: 1640 mg L⁻¹ (FIG. **4B**) compared to 240 mg L⁻¹ (FIG. **8B**) in embodiment without Na-dithionite. After alkalinisation of wWS with CaO (pH 12.5, 30 min, FIG. **1**) to recycle the chelator in the form of Ca-EDTA, the Fe precipitated as Fe hydroxide (FIG. **4B**) which is highly adsorptive for toxic metals. The adsorption of toxic metals, i.e. Pb, on Fe hydroxide shifted the equilibrium of the Pb-EDTA substitution reaction towards the products: toxic metals, i.e. Pb, were released from EDTA complex and precipitated as insoluble hydroxides, chelator was recycled in the form of Ca-EDTA. This shift in equilibrium, induced by excess Fe, renders additional alkaline adsorption of toxic metals on polysaccharide material unnecessary. The waste material from the embodiment with Na-dithionite was composed of Ca(OH)₂, the co-precipitate of As, toxic metals and Fe, and precipitate of toxic metals hydroxides. It was removed from solution by filtration and heated at 500 °C for 1h to oxidise hydroxides to nearly-water insoluble metal oxides. The concentration of leachable As (deionised water extraction, solid (w) liquid ration 1:10, 24h extraction time) was below the limit of quantification in untreated and heated waste material. Treatment with heating however reduced the concentration of leachable Pb in waste material from 286 mg kg⁻¹ to 5.7 mg kg⁻¹. This classifies treated waste material as non-hazardous and cheaper for disposal.

In another embodiment the acidic soil (pH 4.8) containing 210 mg kg⁻¹ of As as toxic metalloid and 770 mg kg⁻¹ of Pb as toxic metal was washed. The soil slurry contained 50 mM EDTA, 100 mM oxalic acid and 50 mM Na-dithionite, w / V ratio was 1 / 1.5. After 1 h of washing and solid / liquid separation the wWS contained 70 mg L⁻¹ of As, 515 mg L⁻¹ of Pb, and 37 mmol kg⁻¹ of oxalic acid. Addition of (a) 100 mM of CaCl₂ or (b) 54 mM of CaO to wWS completely recover oxalic acid from wWS as Ca-oxalate precipitate. Addition of CaO raised the pH of wWS from approx. pH 5.0 to pH 7.0. Some Fe-oxalate from dissolution of Fe oxide-hydroxides also co-precipitated. The wWS was further alkalized with CaO to pH 9.0 to recover As as co-precipitate with Fe, and to pH 12.5 to recycle EDTA as Ca-EDTA, and to precipitate and recover Pb as hydroxide. All precipitates were separated from liquid phase by centrifugation. The treated WS was reused in the next in series of batches.

In another embodiment of the process according to invention the limestone sand from stop butt of shooting range was washed with WS containing 100 mM EDTA, 100 mM oxalic acid and 50 mM Na-dithionite for 1 h, w /V was 1 / 1.5. After solid / liquid separation the obtained wWS contained 27 mg L⁻¹ of Sb as toxic metalloid, 1380 mg L⁻¹ of Pb as toxic metal and 940 mg L⁻¹ of Fe. The oxalic acid was spent in the washing process and was not detected in the wWS. The wWS was alkalinised by addition of CaO to pH 10 to recover Sb as co-precipitate with Fe (FIGS. **10**A and **10**B). The wWS was further alkalinised with CaO to pH 12.5 to recycle EDTA as Ca-EDTA, and to precipitate Pb as hydroxide (FIG. **11**).

## Claims

1. A batch process for washing of Fe containing substrate, such as soil, sediment or sludge, to remove toxic metalloids As and Sb and/or toxic metals selected from the group consisting of Pb, Zn, Cd, Cu, Ni, Hg, Mo, Mn, Tl, Cr, Cs, Sr, Th and U, in a series of batch processes, said process comprising:
(a) preparing a substrate slurry by slurrying a Fe containing substrate with a washing solution containing a chelator which is poorly soluble in acidic aqueous solutions, wherein said chelator is in the form of a Ca-chelator-complex recovered in the previous in series of batches, wherein the solid / liquid ratio of the slurry is in the range 1 / 0.8 - 1 / 30;
(b) addition of an acidic form of chelator recovered in the previous in series of batches and optionally Na-chelator-complex to supplement chelator losses during the process into the substrate slurry in step (a) to yield a final concentration of the chelator ranging from 10 to 300 mM;
(c) addition of an acid capable of forming an insoluble Ca salt to the substrate slurry in step (a) in a concentration ranging from 10 to 300 mM to dissolute toxic metalloids, if present, from substrate, and to activate the chelator by wining Ca from the Ca-chelator-complex to dissolute toxic metals and Fe from substrate;
(d) washing the substrate slurry from step (a) for 15 - 720 min;
(e) addition of a reductant to the substrate slurry in step (a) or during the substrate washing step
(d) in single or multiple doses in total concentration of 5 - 200 mM, to promote dissolution of toxic metalloids;
(f) optionally, addition of 0.1 - 20% w/w, dry weight of a material having cation-exchange properties to the substrate slurry in step (d) to improve the cation-exchange properties of the substrate and in this way to prevent concentration of cations, such as Na ions, in washing and rinsing solutions;
(g) optionally, addition of 0.05 - 5% w/w, dry weight of a metal capable of forming oxide-hydroxides or of a layered-double-hydroxides to the substrate slurry in step (d) to curb .emissions of chelator, toxic metalloids and toxic metals from the washed and rinsed substrate prepared in step (i);
(h) solid / liquid separation of slurry after the washing step (d) to obtain washed substrate and waste washing solution;
(i) rinsing at least once, e.g., 1-5 times, the washed substrate obtained in step (h) with a rinsing solution and, optionally, with fresh water to supplement water losses during the process to remove residual reagents, toxic metalloids and toxic metals from the substrate, and solid / liquid separation to obtain a waste rinsing solution, and washed and rinsed substrate as a final product;
(j) alkalinisation of the waste washing solution obtained in step (h) and at least one of the waste rinsing solutions obtained in step (i) with a Ca containing base to pH 5.0 - 8.0 to precipitate a Ca-salt of the acid employed in step (c) as a by-product;
(k) alkalinisation of waste washing and rinsing solutions obtained in step (j) with Ca-containing base to pH 8.5 - 11.0 to precipitate Fe from Fe-chelator-complex and co-precipitate toxic metalloids as a by-products;
(l) alkalinisation of waste washing and rinsing solutions obtained in step (k) with Ca-containing base to pH > 11.5 to recover >80% of the chelator as Ca-chelator-complex, to precipitate hydroxides of toxic metals and Ca(OH)₂ formed after hydration of Ca containing base as a by-products, and to yield washing solution to be used in step (a), and rinsing solution to be used in step (i) in the next in series if batches;
(m) optionally, addition of a polysaccharide material to the waste washing and rinsing solutions in step (l) to enhance toxic metals removal by alkaline adsorption on polysaccharide material; and
(n) acidification of at least one of rinsing solutions obtained in step (l) with H₂SO₄ to pH 1.5 - 3 to precipitate the acidic form of chelator to be used in step (b), and yield rinsing solutions to be used in step (i) in the next in series of batches.

2. The process of claim 1 wherein in step (d) the Ca-containing base is added into the substrate slurry, to reduce the amount of by-produced Ca(OH)₂.

3. The process of claim 1 or 2, wherein in step (j) the waste washing and rinsing solutions are alkalinised with Ca containing base to pH> 11.5 to precipitate a Ca-salt of the acid employed in step (c), Fe and toxic metalloids, toxic metals hydroxides and excess Ca(OH)₂ in a single step.

4. The process of any one of claims 1 to 3, wherein the chelator is selected from the group consisting of aminopolycarboxylic acids, polycarboxylic acids, phosphonates, and synthetic and natural poly-acid compounds and their salts.

5. The process of any one of claims 1 to 4, wherein the chelator is selected from the group consisting of ethylenediaminete-tetraacetate (EDTA), nitrilotriacetate (NTA), S,S ethylenediamine-disuccinate (EDDS), and diethylenetriamine-pentaacetate (DTPA).

6. The process of any one of claims 1 to 5, wherein the chelator is an aminopolycarboxylic acid or a salt thereof.

7. The process of any one of claims 1 to 5, wherein the chelator is ethylenediaminete-tetraacetate (EDTA).

8. The process of any one of claims 1 to 7, wherein the final concentration of the chelator used in step (a) ranges from 10 to 300 mM, from 50 to 150 mM, or is 100 mM.

9. The process of any one of claims 1 to 8, wherein the acid capable of forming an insoluble Ca salt is selected from the group consisting of polycarboxylic acids, H₂SO₄, and mixture thereof.

10. The process of any one of claims 1 to 9, wherein the acid capable of forming an insoluble Ca salt is a polycarboxylic acid.

11. The process of any one of claims 1 to 10, wherein the acid capable of forming an insoluble Ca salt is a polycarboxylic acid selected from the group consisting of oxalic acid, tartaric acid, citric acid, and mixture thereof.

12. The process of any one of claims 1 to 11, wherein the acid capable of forming an insoluble Ca salt is oxalic acid.

13. The process of any one of claims 1 to 12, wherein the reductant is selected from the group consisting of Na and Ca dithionites, Na and Ca dithionates, Na and Ca thiosulfates, lithium aluminium hydride, sodium borohydrate, hydrazine, diisobutylaluminium hydride, oxalic acid, formic acid, ascorbic acid, reducing sugars, phosphites, hypophosphites, and phosphorous acid.

14. The process of any one of claims 1 to 13, wherein the reductant is a dithionite.

15. The process of any one of claims 1 to 14, wherein the material having cation-exchange properties is selected from group consisting of clay, zeolites, insoluble resins, biopolymers, humic materials and mixture of thereof.

16. The process of any one of claims 1 to 15, wherein the metal capable of forming oxide-hydroxides is zero-valent Fe, and wherein layered-double-hydroxides derive from hydroxides of divalent and trivalent cations selected from Fe, Ca, Mg, Mn, Li and Al.

17. The process of any one of claims 1 to 16, wherein the Ca containing base used in any one of steps (j) to (l) is selected from the group consisting of CaO, Ca(OH)₂, CaO₂ and mixture thereof.

18. The process of claim 1, comprising:
(a) slurrying a Fe containing substrate with a washing solution containing Ca-EDTA recovered in the previous in series of batches, wherein the solid / liquid ratio of the slurry is in the range 1 / 0.8 - 1 / 30;
(b) addition of an acidic form of EDTA recovered in the previous in series of batches and optionally Na-EDTA to supplement EDTA losses during the process into the substrate slurry in step (a) to yield a final concentration of EDTA ranging from 10 to 300 mM;
(c) addition of an acid capable of forming an insoluble Ca salt, selected from the group consisting of polycarboxylic acids, H2SO4, and mixture thereof, to the substrate slurry in step (a) in a concentration ranging from 10 to 300 mM to dissolute toxic metalloids, if present, from substrate, and to activate EDTA by wining Ca from the Ca-EDTA-complex to dissolute toxic metals and Fe from substrate;
(d) washing the substrate slurry from step (a) for 15 - 720 min;
(e) addition of a reductant, selected from the group consisting of Na and Ca dithionites, Na and Ca dithionates, Na and Ca thiosulfates, lithium aluminium hydride, sodium borohydrate, hydrazine, diisobutylaluminium hydride, oxalic acid, formic acid, ascorbic acid, reducing sugars, phosphites, hypophosphites, and phosphorous acid, to the substrate slurry in step (a) or during the substrate washing step (d) in single or multiple doses in total concentration of 5 - 200 mM, to promote dissolution of toxic metalloids;
(f) optionally, addition of 0.1 - 20% w/w, dry weight of a material having cation-exchange properties, selected from group consisting of clay, zeolites, insoluble resins, biopolymers, and mixture of thereof, to the substrate slurry in step (d) to improve the cation-exchange properties of the substrate and in this way to prevent concentration of cations, such as Na ions, in washing and rinsing solutions;
(g) optionally, addition of 0.05 - 5% w/w, dry weight of zero-valent Fe to the substrate slurry in step (d) to curb emissions of chelator, toxic metalloids and toxic metals from the washed and rinsed substrate prepared in step (i);
(h) solid / liquid separation of slurry after the washing step (d) to obtain washed substrate and waste washing solution;
(i) rinsing at least once, e.g., 1-5 times, the washed substrate obtained in step (h) with a rinsing solution and, optionally, with fresh water to supplement water losses during the process to remove residual reagents, toxic metalloids and toxic metals from the substrate, and solid / liquid separation to obtain a waste rinsing solution, and washed and rinsed substrate as a final product;
(j) alkalinisation of the waste washing solution obtained in step (h) and at least one of the waste rinsing solutions obtained in step (i) with a Ca containing base, selected from the group consisting of CaO, Ca(OH)₂, CaO₂ and mixture thereof, to pH 5.0 - 8.0 to precipitate a Ca-salt of the acid employed in step (c) as a by-product;
(k) alkalinisation of waste washing and rinsing solutions obtained in step (j) with Ca-containing base, selected from the group consisting of CaO, Ca(OH)₂, CaO₂ and mixture thereof, to pH 8.5 - 11.0 to precipitate Fe from Fe-EDTA-complex and co-precipitate toxic metalloids as a by-products;
(l) alkalinisation of waste washing and rinsing solutions obtained in step (k) with Ca-containing base, selected from the group consisting of CaO, Ca(OH)₂, CaO₂ and mixture thereof, to pH > 11.5 to recover >80% of EDAT as Ca-EDTA, to precipitate hydroxides of toxic metals and Ca(OH)₂ formed after hydration of Ca containing base as a by-products, and to yield washing solution to be used in step (a), and rinsing solution to be used in step (i) in the next in series if batches;
(m) optionally, addition of a polysaccharide material to the waste washing and rinsing solutions in step (l) to enhance toxic metals removal by alkaline adsorption on polysaccharide material; and
(n) acidification of at least one of rinsing solutions obtained in step (l) with H₂SO₄ to pH 1.5 - 3 to precipitate the acidic form of EDTA to be used in step (b), and yield rinsing solutions to be used in step (i) in the next in series of batches.

## Patentansprüche

1. Chargenprozess zum Waschen von Fe-haltigem Substrat wie z. B. Erde, Sediment oder Schlamm zum Entfernen der toxischen Metalloide As und Sb und/oder von toxischen Metallen, die aus der Gruppe ausgewählt sind, die aus Pb, Zn, Cd, Cu, Ni, Hg, Mo, Mn, Tl, Cr, Cs, Sr, Th und U besteht, in einer Reihe von Chargenprozessen, wobei der Prozess umfasst:
(a) Aufschlämmen eines Fe-haltigen Substrats mit einer Waschlösung, die einen Chelatbildner enthält, der in sauren wässrigen Lösungen schlecht löslich ist, wobei der Chelatbildner in Form eines Ca-Chelatbildner-Komplexes vorliegt, der in der vorherigen in der Reihe von Chargen gewonnen wurde, wobei das Fest/Flüssig-Verhältnis der Aufschlämmung in dem Bereich von 1:0,8 bis 1:30 liegt;
(b) Zusetzen einer sauren Form des Chelatbildners, der in der vorherigen in der Reihe von Chargen gewonnen wurde, und optional eines Na-Chelatbildner-Komplexes, um Chelatbildnerverluste während des Prozesses in der Substrataufschlämmung in Schritt (a) unter Erhalt einer Endkonzentration des Chelatbildners im Bereich von 10 bis 300 mM zu supplementieren;
(c) Zusetzen einer Säure, die in der Lage ist, ein unlösliches Ca-Salz zu bilden, zu der Substrataufschlämmung in Schritt (a) in einer Konzentration im Bereich von 10 bis 300 mM, um ggf. vorhandene toxische Metalloide aus dem Substrat zu lösen und den Chelatbildner zu aktivieren, indem Ca aus dem Ca-Chelatbildner-Komplex gewonnen wird, um toxische Metalle und Fe aus dem Substrat zu lösen;
(d) Waschen der Substrataufschlämmung von Schritt (a) 15 bis 720 min lang;
(e) Zusetzen eines Reduktionsmittels zu der Substrataufschlämmung in Schritt (a) oder während des Substratwaschschritts (d) in Einzel- oder Mehrfachdosen in einer Gesamtkonzentration von 5 bis 200 mM, um das Lösen von toxischen Metalloiden zu fördern;
(f) optional Zusetzen eines Materials mit Kationenaustauscheigenschaften zu der Substrataufschlämmung in Schritt (d) zu 0,1 bis 20 % Gew./Gew. bezogen auf das Trockengewicht, um die Kationenaustauscheigenschaften des Substrats zu verbessern und auf diese Weise eine Konzentration von Kationen wie z. B. Na-Ionen in Wasch- und Spüllösungen zu verhindern;
(g) optional Zusetzen eines Metalls, das in der Lage ist, Oxidhydroxide oder geschichtete Doppelhydroxide zu bilden, zu der Substrataufschlämmung in Schritt (d) zu 0,05 bis 5 % Gew./Gew. bezogen auf das Trockengewicht, um Emissionen von Chelatbildner, toxischen Metalloiden und toxischen Metallen aus dem gewaschenen und gespülten Substrat zu verringern, wie in Schritt (i) hergestellt;
(h) Fest/Flüssig-Abscheidung der Aufschlämmung nach dem Waschschritt (d), um gewaschenes Substrat und Abfallwaschlösung zu erhalten;
(i) Spülen des in Schritt (h) erhaltenen gewaschenen Substrats zumindest einmal, z. B. 1 bis 5 Male, mit einer Spüllösung und optional mit frischem Wasser, um Wasserverluste während des Prozesses zum Entfernen von Restreagenzien, toxischen Metalloiden und toxischen Metallen aus dem Substrat und der Fest/Flüssig-Abscheidung unter Erhalt einer Abfallspüllösung und eines gewaschenen und gespülten Substrats als Endprodukt zu supplementieren;
(j) Alkalisieren der in Schritt (h) erhaltenen Abfallwaschlösung und zumindest einer der in Schritt (i) erhaltenen Abfallspüllösungen mit einer Ca-haltigen Base auf einen pH-Wert von 5,0 bis 8,0, um ein Ca-Salz der in Schritt (c) verwendeten Säure als Nebenprodukt auszufällen;
(k) Alkalisieren von in Schritt (j) erhaltenen Abfallwasch- und Abfallspüllösungen mit einer Ca-haltigen Base auf einen pH-Wert von 8,5 bis 11,0, um Fe aus einem Fe-Chelatbildner-Komplex auszufällen und toxische Metalloide als Nebenprodukte coauszufällen;
(l) Alkalisieren von in Schritt (k) erhaltenen Abfallwasch- und Abfallspüllösungen mit Ca-haltiger Base auf einen pH-Wert > 11,5, um > 80 % des Chelatbildners als Ca-Chelatbildner-Komplex zu gewinnen, um Hydroxide von toxischen Metallen und Ca(OH)₂ auszufällen, die sich nach Hydrierung der Ca-haltigen Base als Nebenprodukte gebildet haben, und um eine Waschlösung, die in Schritt (a) zu verwenden ist, und eine Spüllösung, die in Schritt (i) in der nächsten in der Reihe von Chargen zu verwenden ist, zu erhalten;
(m) optional Zusetzen eines Polysaccharidmaterials zu den Abfallwasch- und Abfallspüllösungen in Schritt (1), um die Entfernung von toxischen Metallen durch alkalische Adsorption auf Polysaccharidmaterial zu verbessern; und
(n) Ansäuern zumindest einer von in Schritt (1) erhaltenen Spüllösungen mit H₂SO₄ auf einen pH-Wert von 1,5 bis 3, um die saure Form eines Chelatbildners zu erhalten, die in Schritt (b) zu verwenden ist, und um Spüllösungen zu erhalten, die in Schritt (i) in der nächsten in der Reihe von Chargen zu verwenden sind.

2. Prozess nach Anspruch 1, wobei die Ca-haltige Base in Schritt (d) in die Substrataufschlämmung zugesetzt wird, um die Menge von Ca(OH)₂ als Nebenprodukt zu verringern.

3. Prozess nach Anspruch 1 oder 2, wobei die Abfallwasch- und Abfallspüllösungen in Schritt (j) mit einer Ca-haltigen Base auf einen pH-Wert > 11,5 alkalisiert werden, um ein Ca-Salz der in Schritt (c) verwendeten Säure, Fe und toxische Metalloide, toxische Metallhydroxide und überschüssiges Ca(OH)₂ in einem einzelnen Schritt auszufällen.

4. Prozess nach einem der Ansprüche 1 bis 3, wobei der Chelatbildner aus der Gruppe ausgewählt ist, die aus Aminopolycarbonsäuren, Polycarbonsäuren, Phosphonaten und synthetischen und natürlichen Polysäureverbindungen und deren Salzen besteht.

5. Prozess nach einem der Ansprüche 1 bis 4, wobei der Chelatbildner aus der Gruppe ausgewählt ist, die aus Ethylendiaminettetraacetat (EDTA), Nitrilotriacetat (NTA), S,S-Ethylendiamindisuccinat (EDDS) und Diethylentriaminpentaacetat (DTPA) besteht.

6. Prozess nach einem der Ansprüche 1 bis 5, wobei der Chelatbildner eine Aminopolycarbonsäure oder ein Salz davon ist.

7. Prozess nach einem der Ansprüche 1 bis 5, wobei der Chelatbildner Ethylendiaminettetraacetat (EDTA) ist.

8. Prozess nach einem der Ansprüche 1 bis 7, wobei die Endkonzentration des in Schritt (a) verwendeten Chelatbildners im Bereich von 10 bis 300 mM liegt; vorzugsweise 50 bis 150 mM, und stärker bevorzugt 100 mM beträgt.

9. Prozess nach einem der Ansprüche 1 bis 8, wobei die Säure, die in der Lage ist, ein unlösliches Ca-Salz zu bilden, aus der Gruppe ausgewählt ist, die aus Polycarbonsäuren, H₂SO₄ und einem Gemisch davon besteht.

10. Prozess nach einem der Ansprüche 1 bis 9, wobei die Säure, die in der Lage ist, ein unlösliches Ca-Salz zu bilden, eine Polycarbonsäure ist.

11. Prozess nach einem der Ansprüche 1 bis 10, wobei die Säure, die in der Lage ist, ein unlösliches Ca-Salz zu bilden, eine Polycarbonsäure ist, die aus der Gruppe ausgewählt ist, die aus Oxalsäure, Weinsteinsäure, Zitronensäure und einem Gemisch davon besteht.

12. Prozess nach einem der Ansprüche 1 bis 11, wobei die Säure, die in der Lage ist, ein unlösliches Ca-Salz zu bilden, eine Oxalsäure ist.

13. Prozess nach einem der Ansprüche 1 bis 12, wobei das Reduktionsmittel aus der Gruppe ausgewählt ist, die aus Na- und Ca-Dithioniten, Na- und Ca-Dithionaten, Na- und Ca-Thiosulfaten, Lithiumaluminiumhydrid, Natriumborhydrat, Hydrazin, Diisobutylaluminiumhydrid, Oxalsäure, Ameisensäure, Ascorbinsäure, reduzierenden Zuckern, Phosphiten, Hypophosphiten und phosphoriger Säure besteht.

14. Prozess nach einem der Ansprüche 1 bis 13, wobei das Reduktionsmittel ein Dithionit ist, vorzugsweise Na-Dithionit.

15. Prozess nach einem der Ansprüche 1 bis 14, wobei das Material mit Kationenaustauscheigenschaften aus der Gruppe ausgewählt ist, die aus Ton, Zeolithen, unlöslichen Harzen, Biopolymeren, Huminstoffen und einem Gemisch davon besteht.

16. Prozess nach einem der Ansprüche 1 bis 15, wobei das Metall, das in der Lage ist, Oxidhydroxide zu bilden, nullwertiges Fe ist, und wobei doppelschichtige Hydroxide von Hydroxiden von zweiwertigen und dreiwertigen Kationen abgeleitet sind, die aus Fe, Ca, Mg, Mn, Li und Al ausgewählt sind.

17. Prozess nach einem der Ansprüche 1 bis 16, wobei die Ca-haltige Base, die in einem der Schritte (j) bis (1) verwendet wird, aus der Gruppe ausgewählt ist, die aus CaO, Ca(OH)₂, CaO₂ und einem Gemisch davon besteht.

18. Prozess nach Anspruch 1, der umfasst:
(a) Aufschlämmen eines Fe-haltigen Substrats mit einer Waschlösung, die Ca-EDTA enthält, das in der vorherigen in der Reihe von Chargen gewonnen wurde, wobei das Fest/Flüssig-Verhältnis der Aufschlämmung in dem Bereich von 1:0,8 bis 1:30 liegt;
(b) Zusetzen einer sauren Form von EDTA, das in der vorherigen Chargenreihe gewonnen wurde, und optional eines Na-EDTA-Komplexes, um EDTA-Verluste während des Prozesses in der Substrataufschlämmung in Schritt (a) unter Erhalt einer Endkonzentration von EDTA im Bereich von 10 bis 300 mM zu supplementieren;
(c) Zusetzen einer Säure, die in der Lage ist, ein unlösliches Ca-Salz zu bilden, die aus der Gruppe ausgewählt ist, die aus Polycarbonsäuren, H₂SO₄ und einem Gemisch davon besteht, zu der Substrataufschlämmung in Schritt (a) in einer Konzentration im Bereich von 10 bis 300 mM, um ggf. vorhandene toxische Metalloide aus dem Substrat zu lösen und EDTA zu aktivieren, indem Ca aus dem Ca-EDTA-Komplex gewonnen wird, um toxische Metalle und Fe aus dem Substrat zu lösen;
(d) Waschen der Substrataufschlämmung von Schritt (a) 15 bis 720 min lang;
(e) Zusetzen eines Reduktionsmittels, das aus der Gruppe ausgewählt ist, die aus Na- und Ca-Dithioniten, Na- und Ca-Dithionaten, Na- und Ca-Thiosulfaten, Lithiumaluminiumhydrid, Natriumborhydrat, Hydrazin, Diisobutylaluminiumhydrid, Oxalsäure, Ameisensäure, Ascorbinsäure, reduzierenden Zuckern, Phosphiten, Hypophosphiten und phosphoriger Säure besteht, zu der Substrataufschlämmung in Schritt (a) oder während des Substratwaschschritts (d) in Einzel- oder Mehrfachdosen in einer Gesamtkonzentration von 5 bis 200 mM, um ein Lösen von toxischen Metalloiden zu fördern;
(f) optional Zusetzen eines Materials mit Kationenaustauscheigenschaften, das aus der Gruppe ausgewählt ist, die aus Ton, Zeolithen, unlöslichen Harzen, Biopolymeren und einem Gemisch davon besteht, zu der Substrataufschlämmung in Schritt (d) zu 0,1 bis 20 % Gew./Gew. bezogen auf das Trockengewicht, um die Kationenaustauscheigenschaften des Substrats zu verbessern und auf diese Weise eine Konzentration von Kationen wie z. B. Na-Ionen in Wasch- und Spüllösungen zu verhindern;
(g) optional Zusetzen von nullwertigem Fe zu 0,05 bis 5 % Gew./Gew. bezogen auf das Trockengewicht zu der Substrataufschlämmung in Schritt (d), um Emissionen von Chelatbildner, toxischen Metalloiden und toxischen Metallen aus dem gewaschenen und gespülten Substrat zu verringern, wie in Schritt (i) hergestellt;
(h) Fest/Flüssig-Abscheidung der Aufschlämmung nach dem Waschschritt (d), um gewaschenes Substrat und Abfallwaschlösung zu erhalten;
(i) Spülen des in Schritt (h) erhaltenen gewaschenen Substrats zumindest einmal, z. B. 1 bis 5 Male, mit einer Spüllösung und optional mit frischem Wasser, um Wasserverluste während des Prozesses zum Entfernen von Restreagenzien, toxischen Metalloiden und toxischen Metallen aus dem Substrat und der Fest/Flüssig-Abscheidung unter Erhalt einer Abfallspüllösung und eines gewaschenen und gespülten Substrats als Endprodukt zu supplementieren;
(j) Alkalisieren der in Schritt (h) erhaltenen Abfallwaschlösung und zumindest einer der in Schritt (i) erhaltenen Abfallspüllösungen mit einer Ca-haltigen Base, die aus der Gruppe ausgewählt ist, die aus CaO, Ca(OH)₂, CaO₂ und einem Gemisch davon besteht, auf einen pH-Wert von 5,0 bis 8,0, um ein Ca-Salz der in Schritt (c) verwendeten Säure als Nebenprodukt auszufällen;
(k) Alkalisieren von in Schritt (j) erhaltenen Abfallwasch- und Abfallspüllösungen mit einer Ca-haltigen Base, die aus der Gruppe ausgewählt ist, die aus CaO, Ca(OH)₂, CaO₂ und einem Gemisch davon besteht, auf einen pH-Wert von 8,5 bis 11,0, um Fe aus dem Fe-EDTA-Komplex auszufüllen und toxische Metalloide als Nebenprodukte coauszufällen;
(l) Alkalisieren von in Schritt (k) erhaltenen Abfallwasch- und Abfallspüllösungen mit Ca-haltiger Base, die aus der Gruppe ausgewählt ist, die aus CaO, Ca(OH)₂, CaO₂ und einem Gemisch davon besteht, auf einen pH-Wert > 11,5, um > 80 % EDTA als Ca-EDTA-Komplex zu gewinnen, um Hydroxide von toxischen Metallen und Ca(OH)₂ auszufällen, die sich nach Hydrierung der Ca-haltigen Base als Nebenprodukte gebildet haben, und um eine Waschlösung, die in Schritt (a) zu verwenden ist, und eine Spüllösung, die in Schritt (i) in der nächsten in der Reihe von Chargen zu verwenden ist, zu erhalten;
(m) optional Zusetzen eines Polysaccharidmaterials zu den Abfallwasch- und Abfallspüllösungen in Schritt (1), um die Entfernung von toxischen Metallen durch alkalische Adsorption auf Polysaccharidmaterial zu verbessern; und
(n) Ansäuern zumindest einer von in Schritt (1) erhaltenen Spüllösungen mit H₂SO₄ auf einen pH-Wert von 1,5 bis 3, um die saure Form von EDTA zu erhalten, die in Schritt (b) zu verwenden ist, und um Spüllösungen zu erhalten, die in Schritt (i) in der nächsten in der Reihe von Chargen zu verwenden sind.

## Revendications

1. Procédé par lots pour le lavage d'un substrat contenant du Fe, tel que du sol, des sédiments ou des boues, pour éliminer les métalloïdes toxiques As et Sb et/ou les métaux toxiques sélectionnés dans le groupe constitué par Pb, Zn, Cd, Cu, Ni, Hg, Mo, Mn, Tl, Cr, Cs, Sr, Th et U, dans une série de procédés par lots, ledit procédé comprenant :
(a) la mise en suspension d'un substrat contenant du Fe avec une solution de lavage contenant un chélateur qui est peu soluble dans les solutions aqueuses acides, ledit chélateur étant sous la forme d'un complexe chélateur de Ca récupéré dans la série de lots précédente, le rapport solide/liquide de la suspension étant dans la plage de 1/0,8 à 1/30 ;
(b) l'ajout d'une forme acide du chélateur récupéré dans la série de lots précédente et éventuellement d'un complexe chélateur Na pour compléter les pertes de chélateur au cours du procédé dans la suspension de substrat à l'étape (a) pour obtenir une concentration finale du chélateur allant de 10 à 300 mM ;
(c) l'ajout d'un acide capable de former un sel de Ca insoluble à la suspension de substrat à l'étape (a) dans une concentration allant de 10 à 300 mM pour dissoudre les métalloïdes toxiques, s'ils sont présents, du substrat, et pour activer le chélateur en extrayant le Ca du complexe chélateur de Ca pour dissoudre les métaux toxiques et le Fe du substrat ;
(d) le lavage de la suspension de substrat de l'étape (a) pendant 15 à 720 min ;
(e) l'ajout d'un réducteur à la suspension de substrat à l'étape (a) ou pendant l'étape de lavage du substrat (d) en doses uniques ou multiples à une concentration totale de 5 à 200 mM, pour favoriser la dissolution des métalloïdes toxiques ;
(f) éventuellement, l'ajout de 0,1 à 20 % p/p, de poids sec d'un matériau ayant des propriétés d'échange de cations à la suspension de substrat à l'étape (d) pour améliorer les propriétés d'échange de cations du substrat et ainsi empêcher la concentration de cations, tels que les ions Na, dans les solutions de lavage et de rinçage ;
(g) éventuellement, l'ajout de 0,05 à 5 % p/p, de poids sec d'un métal capable de former des oxydes-hydroxydes ou des hydroxydes doubles stratifiés à la suspension de substrat à l'étape (d) pour réduire les émissions de chélateur, de métalloïdes toxiques et de métaux toxiques provenant du substrat lavé et rincé préparé à l'étape (i) ;
(h) la séparation solide/liquide de la suspension après l'étape de lavage (d) pour obtenir un substrat lavé et une solution de lavage des déchets ;
(i) le rinçage au moins une fois, par exemple 1 à 5 fois, du substrat lavé obtenu à l'étape (h) avec une solution de rinçage et, éventuellement, avec de l'eau fraîche pour compléter les pertes d'eau pendant le processus pour éliminer les réactifs résiduels, les métalloïdes toxiques et les métaux toxiques du substrat, et la séparation solide/liquide pour obtenir une solution de rinçage usagée, et un substrat lavé et rincé comme produit final ;
(j) l'alcalinisation de la solution de lavage des déchets obtenue à l'étape (h) et d'au moins une des solutions de rinçage des déchets obtenues à l'étape (i) avec une base contenant du Ca à un pH de 5,0 à 8,0 pour précipiter un sel de Ca de l'acide utilisé à l'étape (c) comme sous-produit ;
(k) l'alcalinisation des solutions de lavage et de rinçage des déchets obtenues à l'étape (j) avec une base contenant du Ca jusqu'à un pH de 8,5 à 11,0 pour précipiter le Fe du complexe chélateur de Fe et coprécipiter les métalloïdes toxiques comme sous-produits ;
(l) l'alcalinisation des solutions de lavage et de rinçage des déchets obtenues à l'étape (k) avec une base contenant du Ca jusqu'à un pH > 11,5 pour récupérer > 80 % du chélateur sous forme de complexe chélateur de Ca, pour précipiter les hydroxydes de métaux toxiques et le Ca(OH)₂ formés après hydratation de la base contenant du Ca comme sous-produits, et pour produire une solution de lavage à utiliser à l'étape (a), et une solution de rinçage à utiliser à l'étape (i) dans la série suivante de lots ;
(m) éventuellement, l'ajout d'un matériau polysaccharidique aux solutions de lavage et de rinçage des déchets à l'étape (1) pour améliorer l'élimination des métaux toxiques par adsorption alcaline sur le matériau polysaccharidique ; et
(n) l'acidification d'au moins une des solutions de rinçage obtenues à l'étape (1) avec H₂SO₄ jusqu'à un pH de 1,5 à 3 pour précipiter la forme acide du chélateur à utiliser à l'étape (b), et produire des solutions de rinçage à utiliser à l'étape (i) dans la série de lots suivante.

2. Procédé selon la revendication 1, dans lequel, à l'étape (d), la base contenant du Ca est ajoutée dans la suspension de substrat, pour réduire la quantité de Ca(OH)₂ sous-produit .

3. Procédé selon la revendication 1 ou 2, dans lequel, à l'étape (j), les solutions de lavage et de rinçage des déchets sont alcalinisées avec une base contenant du Ca jusqu'à un pH > 11,5 pour précipiter un sel de Ca de l'acide utilisé à l'étape (c), du Fe et des métalloïdes toxiques, des hydroxydes de métaux toxiques et du Ca(OH)₂ en excès en une seule étape.

4. Procédé selon l'une quelconque des revendications 1 à 3, dans lequel le chélateur est choisi dans le groupe constitué par les acides aminopolycarboxyliques, les acides polycarboxyliques, les phosphonates et les composés polyacides synthétiques et naturels et leurs sels.

5. Procédé selon l'une quelconque des revendications 1 à 4, dans lequel le chélateur est choisi dans le groupe constitué par l'éthylènediaminetétraacétate (EDTA), le nitrilotriacétate (NTA), le S,S éthylènediaminedisuccinate (EDDS) et le diéthylènetriaminepentaacétate (DTPA).

6. Procédé selon l'une quelconque des revendications 1 à 5, dans lequel le chélateur est un acide aminopolycarboxylique ou un sel de celui-ci.

7. Procédé selon l'une quelconque des revendications 1 à 5, dans lequel le chélateur est l'éthylènediaminetétraacétate (EDTA).

8. Procédé selon l'une quelconque des revendications 1 à 7, dans lequel la concentration finale du chélateur utilisé à l'étape (a) est comprise entre 10 et 300 mM ; préférablement entre 50 et 150 mM, plus préférablement est de 100 mM.

9. Procédé selon l'une quelconque des revendications 1 à 8, dans lequel l'acide capable de former un sel de Ca insoluble est choisi dans le groupe constitué par les acides polycarboxyliques, H₂SO₄ et un mélange de ceux-ci.

10. Procédé selon l'une quelconque des revendications 1 à 9, dans lequel l'acide capable de former un sel de Ca insoluble est un acide polycarboxylique.

11. Procédé selon l'une quelconque des revendications 1 à 10, dans lequel l'acide capable de former un sel de Ca insoluble est un acide polycarboxylique choisi dans le groupe constitué par l'acide oxalique, l'acide tartrique, l'acide citrique et un mélange de ceux-ci.

12. Procédé selon l'une quelconque des revendications 1 à 11, dans lequel l'acide capable de former un sel de Ca insoluble est l'acide oxalique.

13. Procédé selon l'une quelconque des revendications 1 à 12, dans lequel le réducteur est choisi dans le groupe constitué par les dithionites de Na et Ca, les dithionates de Na et Ca, les thiosulfates de Na et Ca, l'hydrure de lithium et d'aluminium, le borohydrate de sodium, l'hydrazine, l'hydrure de diisobutylaluminium, l'acide oxalique, l'acide formique, l'acide ascorbique, les sucres réducteurs, les phosphites, les hypophosphites et l'acide phosphoreux.

14. Procédé selon l'une quelconque des revendications 1 à 13, dans lequel le réducteur est un dithionite, préférablement un dithionite de Na.

15. Procédé selon l'une quelconque des revendications 1 à 14, dans lequel le matériau ayant des propriétés d'échange de cations est choisi dans le groupe constitué par l'argile, les zéolites, les résines insolubles, les biopolymères, les matériaux humiques et leurs mélanges.

16. Procédé selon l'une quelconque des revendications 1 à 15, dans lequel le métal capable de former des oxydes-hydroxydes est du Fe de valence zéro, et dans lequel les hydroxydes doubles stratifiés dérivent d'hydroxydes de cations divalents et trivalents choisis parmi Fe, Ca, Mg, Mn, Li et Al.

17. Procédé selon l'une quelconque des revendications 1 à 16, dans lequel la base contenant du Ca utilisée dans l'une quelconque des étapes (j) à (1) est choisie dans le groupe constitué de CaO, Ca(OH)₂, CaO₂ et un mélange de ceux-ci.

18. Procédé selon la revendication 1, comprenant :
(a) la mise en suspension d'un substrat contenant du Fe avec une solution de lavage contenant du Ca-EDTA récupéré dans la série de lots précédente, le rapport solide/liquide de la suspension étant compris entre 1/0,8 et 1/30 ;
(b) l'ajout d'une forme acide d'EDTA récupérée dans la série de lots précédente et éventuellement de Na-EDTA pour compléter les pertes d'EDTA au cours du procédé dans la suspension de substrat à l'étape (a) pour obtenir une concentration finale d'EDTA allant de 10 à 300 mM ;
(c) l'ajout d'un acide capable de former un sel de Ca insoluble, choisi dans le groupe constitué par les acides polycarboxyliques, H₂SO₄ et un mélange de ceux-ci, à la suspension de substrat dans l'étape (a) dans une concentration allant de 10 à 300 mM pour dissoudre les métalloïdes toxiques, s'ils sont présents, du substrat, et pour activer l'EDTA en extrayant le Ca du complexe Ca-EDTA pour dissoudre les métaux toxiques et le Fe du substrat ;
(d) le lavage de la suspension de substrat de l'étape (a) pendant 15 à 720 min ;
(e) l'ajout d'un réducteur, choisi dans le groupe constitué par les dithionites de Na et Ca, les dithionates de Na et Ca, les thiosulfates de Na et Ca, l'hydrure de lithium et d'aluminium, le borohydrate de sodium, l'hydrazine, l'hydrure de diisobutylaluminium, l'acide oxalique, l'acide formique, l'acide ascorbique, les sucres réducteurs, les phosphites, les hypophosphites et l'acide phosphoreux, à la suspension de substrat à l'étape (a) ou pendant l'étape de lavage du substrat (d) en doses uniques ou multiples à une concentration totale de 5 à 200 mM, pour favoriser la dissolution des métalloïdes toxiques.
(f) éventuellement, l'ajout de 0,1 à 20 % p/p, de poids sec d'un matériau ayant des propriétés d'échange de cations, choisi dans le groupe constitué par l'argile, les zéolites, les résines insolubles, les biopolymères et un mélange de ceux-ci, à la suspension de substrat dans l'étape (d) pour améliorer les propriétés d'échange de cations du substrat et ainsi empêcher la concentration de cations, tels que les ions Na, dans les solutions de lavage et de rinçage ;
(g) éventuellement, l'ajout de 0,05 à 5 % p/p, de poids sec de Fe zérovalent à la suspension de substrat à l'étape (d) pour réduire les émissions de chélateur, de métalloïdes toxiques et de métaux toxiques provenant du substrat lavé et rincé préparé à l'étape (i) ;
(h) la séparation solide/liquide de la suspension après l'étape de lavage (d) pour obtenir un substrat lavé et une solution de lavage des déchets ;
(i) la rinçage au moins une fois, par exemple 1 à 5 fois, du substrat lavé obtenu à l'étape (h) avec une solution de rinçage et, éventuellement, avec de l'eau fraîche pour compléter les pertes d'eau pendant le processus pour éliminer les réactifs résiduels, les métalloïdes toxiques et les métaux toxiques du substrat, et la séparation solide/liquide pour obtenir une solution de rinçage usagée, et un substrat lavé et rincé comme produit final ;
(j) l'alcalinisation de la solution de lavage des déchets obtenue à l'étape (h) et d'au moins une des solutions de rinçage des déchets obtenues à l'étape (i) avec une base contenant du Ca, choisie dans le groupe constitué de CaO, Ca(OH)₂, CaO₂ et un mélange de ceux-ci, à un pH 5,0 à 8,0 pour précipiter un sel de Ca de l'acide utilisé à l'étape (c) comme sous-produit ;
(k) l'alcalinisation des solutions de lavage et de rinçage des déchets obtenues à l'étape (j) avec une base contenant du Ca, choisie dans le groupe constitué de CaO, Ca(OH)₂, CaO₂ et un mélange de ceux-ci, à un pH 8,5 à 11,0 pour précipiter le Fe du complexe Fe-EDTA et coprécipiter les métalloïdes toxiques comme sous-produits ;
(l) l'alcalinisation des solutions de lavage et de rinçage des déchets obtenues à l'étape (k) avec une base contenant du Ca, choisie dans le groupe constitué de CaO, Ca(OH)₂, CaO₂ et un mélange de ceux-ci, à pH > 11,5 pour récupérer > 80 % d'EDAT sous forme de Ca-EDTA, pour précipiter les hydroxydes de métaux toxiques et de Ca(OH)₂ formés après l'hydratation de la base contenant du Ca comme sous-produits, et pour produire une solution de lavage à utiliser à l'étape (a), et une solution de rinçage à utiliser à l'étape (i) dans la série suivante de lots ;
(m) éventuellement, l'ajout d'un matériau polysaccharidique aux solutions de lavage et de rinçage des déchets à l'étape (1) pour améliorer l'élimination des métaux toxiques par adsorption alcaline sur le matériau polysaccharidique ; et
(n) l'acidification d'au moins une des solutions de rinçage obtenues à l'étape (1) avec H₂SO₄ jusqu'à un pH 1,5 à 3 pour précipiter la forme acide de l'EDTA à utiliser à l'étape (b), et produire des solutions de rinçage à utiliser à l'étape (i) dans la série de lots suivante.
